# EUROPÄISCHE PATENTANMELDUNG

(11) **EP 0 829 969 A2**
(43) Veröffentlichungstag der Anmeldung: **18.03.1998**
(21) Anmeldenummer: 97114159.3
(22) Anmeldetag: 16.08.1997
(51) Int. Cl.: H04B 1/38

(54) **Halterung für ein Handgerät**

(30) Priorität: 31.08.1996 DE 19635392
(71) Anmelder: ROBERT BOSCH GMBH, 70442 Stuttgart (DE)
(72) Erfinder: Heidrich, Michael, 12043 Berlin (DE); Birkl, Gérard-Emile, 12051 Berlin (DE); Siebeneicher, Wolfgang, 12203 Berlin (DE)

(57) **Zusammenfassung**

Es wird eine Halterung vorgeschlagen, die zur stabilen Aufnahme eines Handgerätes (1), insbesondere eines Funkgerätes dient. Die Halterung weist ein Trägerteil (15) und eine mit dem Trägerteil (15) verbundene Aufnahme (5) auf. Die Aufnahme (5) dient in einer ersten stabilen Grundstellung zur Einführung bzw. Entnahme des Handgerätes (1) und ist gegen eine Rückstellkraft in eine Betriebsstellung bringbar. Es sind Verriegelungsmittel (10) vorgesehen, die zur Festlegung eines in die Aufnahme (5) eingesetzten Handgerätes (1) in der Betriebsstellung der Aufnahme (5) dienen. Bei Erreichen der Betriebsstellung rastet die Aufnahme (5) selbsttätig in das Trägerteil (15) ein. Die Verriegelungsmittel (10) sind als Rippen ausgebildet und im Trägerteil (15) angeordnet. Die Rippen (10) greifen in der Betriebsstellung in quer zur Einschubrichtung verlaufende Nuten (20) des Handgerätes (1). Die Aufnahme (5) umfaßt federnde Teile (25), die durch der Aufnahme (5) zugewandte weitere Rippen (30) des Trägerteils (15) in der Betriebsstellung gegen das eingesetzte Handgerät (1) drücken.

## Beschreibung

### Stand der Technik

Die Erfindung geht von einer Halterung für ein Handgerät nach der Gattung des Hauptanspruchs aus.

Aus der DE 91 02 981 U1 ist bereits eine Funkgeräteanordnung mit einem Handgerät und einer Halterung bekannt. In die Halterung ist das Handgerät einsetzbar. die Funkgeräteanordnung weist Mittel zur mechanischen Festlegung des Handgerätes in der Halterung und zur Herstellung elektrischer Verbindungen zwischen Halterung und Handgerät auf. Die Halterung weist eine Aufnahme auf, in die in einer ersten stabilen Grundstellung das Handgerät eingesetzt bzw. entnommen werden kann und die gegen eine Rückstellkraft in eine Betriebsstellung gebracht werden kann. Weiterhin sind Verriegelungsmittel zur Festlegung eines in die Aufnahme eingesetzten Handgerätes in der Betriebsstellung der Aufnahme vorhanden.

### Vorteile der Erfindung

Die erfindungsgemäße Halterung mit den Merkmalen des Hauptanspruchs hat demgegenüber den Vorteil, daß die Verriegelungsmittel als im Trägerteil angeordnete Rippen ausgebildet sind und in der Betriebsstellung in quer zur Einschubrichtung verlaufende Nuten des Handgeräts greifen. Auf diese Weise sind keine zusätzlichen Verriegelungsmittel zur Befestigung des Handgeräts in der Halterung erforderlich, da die Rippen Bestandteil des Trägerteils sind und auf einfache Weise beispielsweise durch Spritzguß einstückig mit dem Trägerteil herstellbar sind. Somit werden Aufwand, Material und Montagekosten gespart.

Ein weiterer Vorteil besteht darin, daß die Aufnahme federnde Teile umfaßt, die durch der Aufnahme zugewandte weitere Rippen des Trägerteils in der Betriebsstellung gegen das eingesetzte Handgerät drücken. Auf diese Weise wird das Handgerät kraft- und formflüssig in der Aufnahme spielfrei aufgenommen, so daß das Handgerät stabil und verwacklungsfrei von der Aufnahme gehalten wird.

Vorteilhaft ist außerdem, daß zur spielfreien Aufnahme des Handgerätes in der Aufnahme kein zusätzliches Montagematerial erforderlich ist, da die weiteren Rippen und die federnden Teile jeweils wieder einstückig mit dem Trägerteil bzw. der Aufnahme beispielsweise durch Spritzguß herstellbar sind. Somit erfordert die kraft- und formschlüssige Verbindung des Funkgerätes mit der Aufnahme nur geringen Aufwand und ist zudem preisgünstig realisierbar.

Durch die in den Unteransprüchen aufgeführten Maßnahmen sind vorteilhafte Weiterbildungen und Verbesserungen der im Hauptanspruch angegebenen Halterung möglich.

Vorteilhaft ist die Verwendung von Stegen an den federnden Teilen der Aufnahme parallel zur Einschubrichtung des Handgerätes, wobei die Stege mit weiteren Nuten des Handgerätes korrespondieren. Auf diese Weist wird die Stabilisierung des in die Aufnahme eingeführten Handgerätes ohne wesentlichen Zusatzaufwand an Material und Kosten weiter verbessert.

Besonders vorteilhaft ist es, die Stege mit Einbuchtungen zu versehen, die mit Hervorhebungen in den weiteren Nuten des Handgerätes korrespondieren. Auf diese Weise kann das Handgerät bereits in der Grundstellung so in die Aufnahme eingesetzt werden, daß es vor Herausfallen gesichert ist.

Vorteilhaft ist außerdem, daß die Aufnahme mit Mitteln zur Stromversorgung und/oder Ladestromregelung eines Akkumulators des Handgerätes versehen ist. Auf diese Weise sind diese Mittel platzsparend in der Aufnahme integriert. Zudem ist die Aufnahme dadurch multifunktional einsetzbar, da sie zum Lade- und/oder Stromversorgungsgerät ausbaubar ist.

Besonders vorteilhaft ist das Einbringen eines Schließzylinders in einen Hohlraum zwischen der Aufnahme und dem Trägerteil, wodurch eine Drehbewegung der Aufnahme in dem Trägerteil verhindert wird. Auf diese Weise kann das Handgerät vor unberechtigter Entnahme gesichert werden.

Ein weiterer Vorteil besteht darin, die Aufnahme mit einem Kontaktträger zu verbinden, der die Gegenkontakte des eingelegten Handgerätes über die elektrisch leitfähigen Kontakte an externe Zusatzeinrichtungen, insbesondere eine Antenne und/oder eine Freisprechanlage anschließt. Dadurch wird eine weitere Erhöhung der Funktionalität der Aufnahme erreicht.

### Zeichnung

Ein Ausführungsbeispiel der Erfindung ist in der Zeichnung dargestellt und in der nachfolgenden Beschreibung näher erläutert. Es zeigen Figur 1 ein Trägerteil, Figur 2 eine Aufnahme, Figur 3 ein Handgerät und Figur 4 eine Halterung mit Schließzylinder, elektrischer Versorgung und einem zusätzlichen Kontaktträger.

### Beschreibung des Ausführungsbeispiels

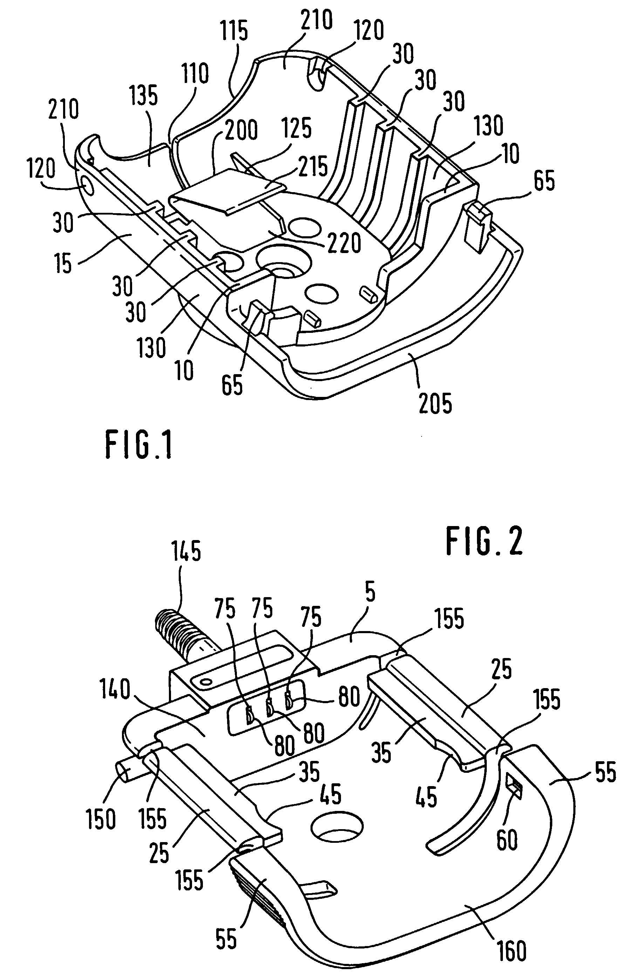

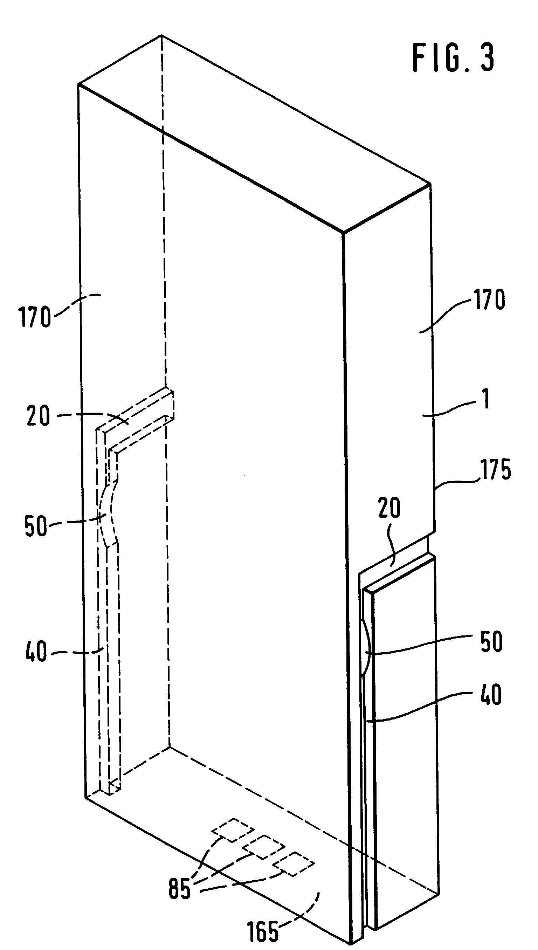

In Figur 1 kennzeichnet 15 ein schalenförmig ausgebildetes Trägerteil einer Halterung für ein als Funkgerät ausgebildetes Handgerät 1 gemäß Figur 3. An seiner Stirnseite 135 weist das Trägerteil 15 eine u-förmige Ausbuchtung 115 auf, die in einen Schlitz 110 mündet, der das Trägerteil 15 bis zum Schlitzende in zwei symmetrische Schalenhälften 210 trennt. Die durch den Schlitz 110 getrennten Schalenhälften 210 weisen an ihrer Längsseite jeweils einen Achsdurchbruch 120 auf, wobei die beiden Achsdurchbrüche 120 einander gegenüberliegen. Am Boden des schalenförmigen Trägerteils 15 ist ein Schenkel 220 des im Querschnitt v-förmigen Federelementes 125 durch eine Nietverbindung befestigt. Dabei ist die Verbindungskante 200 der beiden Schenkel des Federelementes 125 der Stirnseite 135 mit dem Schlitz 110 des Trägerteils 15 zugewandt. Die Achsdurchbrüche 120 befinden sich dabei oberhalb der Verbindungskante 200 und bezüglich der Längsrichtung an gleicher Position wie die Verbindungskante 200 des Federelements 125. Im weiteren Verlauf weist das Trägerteil 15 an den Innenseiten seiner an die Schalenhälften 210 angrenzenden Schalenwände 130 auf der der Stirnseite 135 abgewandten Seite der Achsdurchbrüche 120 jeweils drei Rippen 30 auf. Daran anschließend ragt von den Innenseiten der Schalenwände 130 quer zur Längsrichtung ins Innere des Trägerteils 15 jeweils ein Verriegelungsmittel 10, das ebenfalls rippenförmig ausgebildet ist. Auf der der Stirnseite 135 abgewandten Seite der Verriegelungsmittel 10 ist die Oberkante der Schalenwände 130 abgesenkt, wobei zwei einander gegenüberliegende Rastnasen 65 an der jeweiligen Oberkante angebracht sind und ins Innere des Trägerteils 15 gerichtet sind. An seinem der Stirnseite 135 gegenüberliegenden Ende 205 ist das Trägerteil 15 offen.

In Figur 2 kennzeichnet 5 eine Aufnahme für das Handgerät 1. Die Aufnahme 5 weist an ihrer Stirnfläche 140 drei Öffnungen 75 für elektrisch leitfähige Kontakte 80 auf. Die elektrisch leitfähigen Kontakte 80 ragen dabei in gebogener Form ins Innere der Aufnahme 5. In Höhe der Stirnfläche 140 weisen die beiden Seitenwände der wannenförmig ausgeführten Aufnahme 5 jeweils einen Achsbolzen 150 auf, wobei in Figur 2 aufgrund der perspektivischen Darstellung der Aufnahme 5 nur ein Achsbolzen 150 zu sehen ist. Die Seitenwände der Aufnahme 5 sind jeweils an zwei Stellen durch einen an der Oberseite offenen Schlitz 155 abgeteilt, wobei sich jeweils zwei Schlitze 155 der beiden Wannenhälften gegenüberliegen. Auf diese Weise werden die Wannenhälften in ein erstes Paar einander gegenüberliegender federnder Teile 25 und ein zweites Paar einander gegenüberliegender federnder Teile 55 aufgeteilt, da die Aufnahme 5 an ihrem der Stirnfläche 140 abgewandten Ende 160 offen ist. Das erste Paar der federnden Teile 25 ist dabei der Stirnfläche 140 benachbart und das zweite Paar der federnden Teile 55 bildet das offene Ende 160 der Aufnahme 5. Die ersten federnden Teile 25 weisen auf der Innenseite der Aufnahme 5 in Höhe der Oberkante jeweils einen Steg 35 in Längsrichtung auf. Dabei ist jeder Steg 35 auf der dem zweiten Paar der federnden Teile 55 zugewandten Seite mit einer Einbuchtung 45 versehen. Die zweiten federnden Teile 55 sind im Bereich der Oberkante der Aufnahme 5 jeweils mit einer Rastöffnung 60 versehen, wobei aufgrund der perspektivischen Darstellung der Figur 2 nur die Rastöffnung 60 des rechten federnden Teiles 55 zu sehen ist. Der Aufnahme 5 ist über eine Kabeltülle 145 an der Stirnfläche 140 ein Stromversorgungskabel zugeführt.

In Figur 3 kennzeichnet 1 ein als Funkgerät ausgebildetes Handgerät. Das Funkgerät 1 weist an seiner Stirnfläche 165 drei Öffnungen 85 auf, über die Gegenkontakte des Funkgerätes 1 zur Stromversorgung und/oder zur Ladestromregelung von außen zugänglich sind. Von der Stirnfläche 165 verläuft an den Längsseiten 170 des Funkgerätes 1 jeweils eine Nut 40 in Längsrichtung, wobei die beiden Nuten 40 einander gegenüberliegen und an der Stirnfläche 165 offen sind. Ungefähr in der Mitte der Längsseiten 170 weisen die beiden Nuten 40 jeweils eine Hervorhebung 50 auf, wobei die beiden Hervorhebungen 50 ebenfalls einander gegenüberliegen. Auf der der Stirnfläche 165 abgewandten Seite der Hervorhebungen 50 ist die Nut 40 jeweils rechtwinklig abgewinkelt und findet ihre Fortsetzung in einer quer zur Längsrichtung verlaufenden Nut 20, die am Gehäuseboden 175 offen mündet.

Die Aufnahme 5 wird in das Trägerteil 15 derart eingebracht, daß die Achsbolzen 150 in die Achsdurchbrüche 120 einschnappen, wobei aufgrund des Schlitzes 110 des Trägerteils 15 die Schalenhälften 210 beim Einschnappvorgang entsprechend wegfedern. Auf diese Weise ist die Aufnahme 5 drehbar im Trägerteil 15 gelagert, wobei der noch freie Schenkel 215 des Federelementes 125 nun gegen den Boden der Aufnahme 5 drückt. Das Trägerteil 15 wirkt somit als Federwippe, das zwei stabile Grundstellungen der Aufnahme 5 im Trägerteil 15 ermöglicht. In einer ersten stabilen Grundstellung ist die Aufnahme 5 im Trägerteil 15 durch die Federkraft des Federelementes 125 hochgeklappt, so daß das Funkgerät 1 in die Aufnahme eingeschoben werden kann. Dabei wird das Funkgerät 1 mit seiner Stirnfläche 165 voran über das offene Ende 160 in die Aufnahme 5 eingeführt, wobei die Nuten 40 in die Stege 35 greifen. Der Gehäuseboden 175 des Funkgerätes 1 ist dabei dem Boden der Aufnahme 5 zugewandt. Wenn die Hervorhebungen 50 der Nuten 40 des Funkgerätes 1 beim Einschieben des Funkgerätes 1 in die Aufnahme 5 die Stege 35 erreichen, so federn die ersten federnden Teile 25 weg, bis die mit den Einbuchtungen 45 korrespondierenden Hervorhebungen 50 in den Einbuchtungen 45 der Stege 35 einschnappen. Das Funkgerät 1 ist dann stabil in der Aufnahme 5 gelagert und vor Herausfallen gesichert. Die Abmessungen sind dabei so gewählt, daß bei in die Aufnahme 5 eingerastetem Funkgerät 1 die elektrisch leitfähigen Kontakte 80 die entsprechenden Gegenkontakte des Funkgerätes 1 über die Öffnungen 85 des Funkgerätes 1 kontaktieren. Zur Entnahme des Funkgerätes 1 wird dieses in Längsrichtung aus der Aufnahme 5 herausgezogen, wobei die Hervorhebungen 50 zunächst wieder die ersten federnden Teile 25 wegdrücken und das Funkgerät 1 zur Entnahme freigeben. Bei in die Aufnahme 5 vollständig eingelegtem, das heißt mittels der Hervorhebungen 50 eingerastetem Funkgerät 1 wird die Aufnahme 5 dadurch in eine zweite stabile Grundstellung, die Betriebsstellung, gebracht, indem sie gegen die Rückstellkraft des Federelementes 125 gegen das Trägerteil 15 gedrückt wird. Dabei greifen die Verriegelungsmittel 10 in die weiteren Nuten 20 des Funkgerätes 1 und die Rastnasen 65 rasten aufgrund der Federung der zweiten federnden Teile 55 der Aufnahme 5 in die Rastöffnungen 60 ein. Dadurch wird eine Entnahme des Funkgerätes 1 in der Betriebsstellung verhindert und das Funkgerät in Längsrichtung zusätzlich in der Halterung fixiert. Dazu sind die Abmessungen der weiteren Nuten 20 und der Verriegelungsmittel 10 so aufeinander abzustimmen, daß die Verriegelungsmittel 10 in den Nuten 20 kein Spiel haben. In der Betriebsstellung drücken die Rippen 30 des Trägerteils 15 die ersten federnden Teile 25 zusätzlich gegen das Funkgerät 1, so daß dadurch eine kraft- und formschlüssige Befestigung des Funkgerätes 1 in der Aufnahme 5 erzielt wird und das Funkgerät 1 in der Aufnahme 5 kein Spiel hat. Zum Entriegeln der Aufnahme 5 werden die zweiten federnden Teile 55 zusammengedrückt, so daß die Rastnasen 65 aus den Rastöffnungen 60 entfernt werden und die Aufnahme 5 wieder in die erste stabile Grundstellung federn kann. Das Funkgerät 1 kann dann auf die beschriebene Weise wieder entnommen werden. Durch entsprechendes Auseinanderdrücken der beiden Schalenhälften 210 des Trägerteils 15 lassen sich auch die Achsbolzen wieder aus den Achsdurchbrüchen 120 entfernen und somit die Aufnahme 5 von dem Trägerteil 15 trennen.

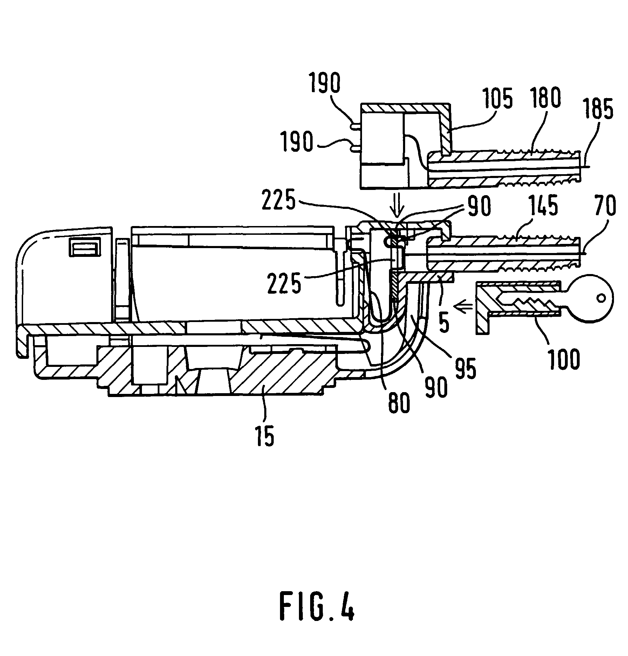

In Figur 4 ist der Querschnitt der Halterung dargestellt, wobei die Aufnahme 5 mit dem Trägerteil 15 verbunden und in die Betriebsstellung gebracht ist. Dabei ist in der Aufnahme 5 eine Leiterplatte 90 angebracht, die eine Schaltung zur Stromversorgung des Funkgerätes 1 und zur Ladestromregelung eines Akkumulators des Funkgerätes 1 aufweist. Dabei sind die elektrisch leitfähigen Kontakte 80 in Öffnungen 225 der Leiterplatte 90 eingeklemmt und mit Leiterbahnen der Leiterplatte 90 verbunden. Über die Kabeltülle 145 ist der Aufnahme 5 eine Stromversorgungsleitung 70 zugeführt. Die Stromversorgungsleitung 70 ist dabei beispielsweise über ein aus einer Öffnung der Leiterplatte 90 herausragendes Teil zumindest einer der drei Kontaktfedern 80 mit einer Stromversorgungsschaltung der Leiterplatte 90 verbunden. In der Figur 4 ist zwischen der Aufnahme 5 und dem Trägerteil 15 ein Hohlraum 95 dargestellt, in den in Pfeilrichtung ein Schließzylinder 100 einbringbar ist, der eine Drehbewegung der Aufnahme 5 in dem Trägerteil 15 verhindert und so das Funkgerät 1 vor unberechtigter Entnahme sichert.

Die Aufnahme 5 ist außerdem mit einem Kontaktträger 105 verbindbar, der in Pfeilrichtung auf die Aufnahme 5 aufsetzbar und beispielsweise über eine Schraubverbindung mit der Aufnahme 5 verschraubbar ist. Dabei sind dem Kontaktträger 105 über eine weitere Kabeltülle 180 weitere Leitungen 185 zuführbar, an die externe Zusatzeinrichtungen, insbesondere eine Antenne und/oder eine Freisprechanlage angeschlossen sind. Die Kontaktierung mit entsprechenden gegebenenfalls weiteren, in Figur 3 nicht dargestellten Gegenkontakten des eingelegten Funkgerätes 1 erfolgt dabei beispielsweise über die elektrisch leitfähigen Kontakte 80 und/oder Zusatzkontakte 190 des Kontaktträgers 105.

Die beschriebene Halterung eignet sich besonders für den Einsatz in bewegten Fahrzeugen, beispielsweise in Kraftfahrzeugen, ist aber nicht auf diese Anwendungsfälle beschränkt.

## Patentansprüche

1. Halterung für ein Handgerät (1), insbesondere ein Funkgerät, mit einem Trägerteil (15) und einer mit dem Trägerteil (15) verbundenen Aufnahme (5), die in einer ersten stabilen Grundstellung zur Einführung bzw. Entnahme des Handgerätes (1) dient und die gegen eine Rückstellkraft in eine Betriebsstellung bringbar ist, wobei Verriegelungsmittel (10) zur Festlegung eines in die Aufnahme (5) eingesetzten Handgeräts (1) in der Betriebsstellung der Aufnahme (5) vorhanden sind, dadurch gekennzeichnet, daß bei Erreichen der Betriebsstellung die Aufnahme (5) selbsttätig in das Trägerteil (15) einrastet, daß die Verriegelungsmittel (10) als Rippen ausgebildet und im Trägerteil (15) angeordnet sind, daß die Rippen (10) in der Betriebsstellung in quer zur Einschubrichtung verlaufende Nuten (20) des Handgeräts (1) greifen und daß die Aufnahme (5) federnde Teile (25) umfaßt, die durch der Aufnahme (5) zugewandte weitere Rippen (30) des Trägerteils (15) in der Betriebsstellung gegen das eingesetzte Handgerät (1) drücken.

2. Halterung nach Anspruch 1, dadurch gekennzeichnet, daß die Aufnahme (5) an ihren federnden Teilen (25) parallel zur Einschubrichtung des Handgerätes (1) Stege (35) aufweist, die mit weiteren Nuten (40) des Handgerätes (1) korrespondieren.

3. Halterung nach Anspruch 2, dadurch gekennzeichnet, daß die Stege (35) Einbuchtungen (45) aufweisen, die mit Hervorhebungen (50) in den weiteren Nuten (40) des Handgerätes (1) korrespondieren.

4. Halterung nach Anspruch 1, 2 oder 3, dadurch gekennzeichnet, daß die Aufnahme (5) zum Einrasten in das Trägerteil (15) in der Betriebsstellung weitere federnde Teile (55) aufweist, die jeweils eine Rastöffnung (60) aufweisen und vor Erreichen der Betriebsstellung durch jeweils eine Rastnase (65) des Trägerteils (15) zusammengedrückt werden, bis die Rastnasen (65) in die Rastöffnungen (60) greifen.

5. Halterung nach einem der vorherigen Ansprüche, dadurch gekennzeichnet, daß das Trägerteil (15) als Federwippe ausgeführt und drehbar mit der Aufnahme (5) verbunden ist.

6. Halterung nach einem der vorherigen Ansprüche, dadurch gekennzeichnet, daß der Aufnahme (5) eine Stromversorgungsleitung (70) zugeführt ist.

7. Halterung nach Anspruch 6, dadurch gekennzeichnet, daß die Aufnahme (5) Öffnungen (75) zur Aufnahme elektrisch leitfähiger Kontakte (80) aufweist, die bei in die Aufnahme (5) eingeführtem Handgerät (1) mit korrespondierenden Gegenkontakten des Handgerätes (1) zusammenwirken.

8. Halterung nach Anspruch 6 oder 7, dadurch gekennzeichnet, daß die Aufnahme (5) eine Schaltung zur Ladestromregelung eines Akkumulators des Handgerätes (1) umfaßt.

9. Halterung nach Anspruch 7 oder 8, dadurch gekennzeichnet, daß die leitfähigen Kontakte (80) mit Leiterbahnen einer Leiterplatte (90) der Stromversorgung und/oder Ladestromregelung verbunden sind.

10. Halterung nach einem der vorherigen Ansprüche, dadurch gekennzeichnet, daß in einen Hohlraum (95) zwischen der Aufnahme (5) und dem Trägerteil (15) ein Schließzylinder (100) einbringbar ist, der eine Drehbewegung der Aufnahme (5) in dem Trägerteil (15) verhindert.

11. Halterung nach einem der Ansprüche 7 bis 10, dadurch gekennzeichnet, daß die Aufnahme (5) mit einem Kontaktträger (105) verbindbar ist, der entsprechende Gegenkontakte des eingelegten Handgerätes (1) über die elektrisch leitfähigen Kontakte (80) und/oder Zusatzkontakte (190) des Kontaktträgers (105) an externe Zusatzeinrichtungen, insbesondere einer Antenne und/oder einer Freisprechanlage anschließt.
